# EUROPEAN PATENT APPLICATION

(11) **EP 3 797 598 A1**
(43) Date of publication of application: **31.03.2021**
(21) Application number: 20166388.7
(22) Date of filing: 27.03.2020
(51) Int. Cl.: A23C 9/12, A23B 4/22, A23B 7/155, A23C 19/032, A23L 3/3571

(54) **USE OF HAFNIA ALVEI FOR REDUCING THE CONTENT OF PATHOGENIC MICROORGANISMS IN FOOD MATERIALS**

(30) Priority: 30.09.2019 US 201962908315 P
(71) Applicant: University of Connecticut, Farmington, CT 06032 (US)
(72) Inventor: D'AMICO, Dennis J., Hebron, CT Connecticut 06248 (US); CHASSARD, Christoph, Aurillac 15000 (FR); CALLON, Cécile, Aurillac 15000 (FR)
(74) Representative: J A Kemp LLP

(57) **Abstract**

The present disclosure is directed to a protective culture comprising an effective amount of at least one strain of *Hafnia alvei* for preventing, inhibiting or reducing the growth of at least one foodborne pathogenic bacteria, such as from the genus Salmonella or Staphylococcus and/or the increase in concentration of the associated toxin production (e.g., produced by the at least one foodborne pathogenic bacteria) in a final food product. The present disclosure also relates to a method for reducing preventing, inhibiting or reducing the growth of at least one foodborne pathogenic bacteria in a food product by using a strain of *H*. *alvei.* Furthermore, the present disclosure is directed to the use of *H. alvei* for securing microbial safety of fermented food products.

## Description

### TECHNOLOGICAL FIELD

The present disclosure relates to the field of improving microbial safety in the production of food products. In particular, the present disclosure relates to a composition and method of using *Hafnia* strains to reduce the concentration of pathogenic microorganisms in food materials.

### BACKGROUND

The presence of pathogenic bacteria in food products is a major concern to the food industry. This problem is particularly important in processed and ready to eat meats and dairy products which are not normally reheated by prior to ingestion and which are stored for extended times in refrigerators. Moreover, after processing, most foods are at risk for recontamination prior to packaging, distribution and final consumption. Indeed, they may be exposed to pathogens in the food handling environment.

Although cheeses made from unpasteurized milk are preferred by many consumers for their complex flavors and aromas among other attributes, they could be also common targets for contamination (Colonna *et al.,* 2011, Montel *et al.,* 2014). According to a recent survey, it is estimated that half of the artisan and specialty cheesemakers in the US manufactured their cheeses either partly or exclusively from unpasteurized milk that had not undergone any heat treatment in 2017 (American Cheese Society, 2018). In the U.S., unpasteurized milk (hereafter referred as "raw") can be used for the production of certain cheeses as long as these cheeses undergo aging for a minimum of 60 days as an alternative to pasteurization. However, several studies have reported on the survival of pathogens such as *Salmonella* species, *Staphylococcus aureus, Listeria monocytogenes,* and shiga toxin-producing *Escherichia coli* including both O157:H7 (STEC 0157) and non-O157:H7 (non-O157 STEC) serotypes beyond the mandatory aging period (D'Amico *et al.,* 2008, Schlesser *et al.,* 2006, D'Amico *et al.,* 2010, Reitsma & Henning, 1996, Park *et al.,* 1970, Miszczycha *et al.,* 2013). In fact, a quantitative risk assessment of listeriosis from the consumption of ripened soft cheese has suggested that aging may increase the pathogen population in certain cases. These findings along with the documented raw milk cheese outbreaks have raised a question of whether aging alone is adequate for controlling foodborne pathogens (D'Amico *et al.,* 2010, Currie *et al.,* 2017, Yilmaz *et al.,* 2009, Dominguez et al., 2009) and underscore the need for additional interventions. Such interventions must be in accordance with the U.S. Standards of Identity for Cheese but should also be practical and inexpensive considering that 76% of cheese makers in the US reported producing 50,000 lb of cheese or less in 2017 (American Cheese Society, 2018).

A variety of methods have been developed in order to reduce the incidence of pathogenic microorganisms in food products. For example, a chemical bacteriocin alternative such as nisin could be of interest due to its antibacterial effects against numerous Gram-positive microorganisms including *L. monocytogenes* (Egan *et al.,* 2016). However nisin activity against Gram-negative bacteria requires alteration of the outer membrane as a result of sublethal injury (Kalchayanand *et al.,* 1992) or chelating agents (Stevens *et al.,* 1991). Moreover, when directly added, nisin may interact with the food matrix and lead to its degradation, thus limiting its inhibitory effects *(Silva et al.,* 2018). Although nisin is the only natural antibacterial preservative that has been cleared for use in foodstuffs in the U.S. and many other countries (Cleveland *et al.,* 2001), the U.S. Standard of Identity for cheese allows its addition only to pasteurized process cheese spread, and not to raw milk cheeses.

The use of protective cultures is an interesting approach. The addition of protective cultures to cheese does not require additional labeling and thus comply with consumers demand for "clean-label". Most protective cultures belong to the group of lactic acid bacteria and are capable of producing bacteriocins and other antimicrobial compounds that can inhibit spoilage and pathogenic microorganisms (Rodgers, 2008). Lactic acid bacteria have a long history of safe usage as starter cultures in food fermentations including raw milk cheese (Holzapfel *et al.,* 1995). Many bacteriocin-producing strains of lactic acid bacteria, including *Lactococcus. lactis ssp. lactis,* have been found to control *Listeria monocytogenes* in different types of raw milk cheese (Benkerroum *et al.,* 2000, Rodriguez *et al.,* 2001). In contrast, little is known about the efficacy of bacterial cultures in controlling Gram-negative pathogens in cheese. Callon *et al.* (2016) demonstrated the control of *E. coli* O26:H11 and 75 O157:H7 serotypes in pasteurized and raw milk cheese model using a strain of *Hafnia alvei* and multiple LAB strains as well. Despite the documentation of the efficacy of lactic acid bacteria and other protective cultures, most of the studied protective cultures in the literature are not commercially available to producers. Commercially produced protective culture strains have been screened for effectiveness, safety and desirable properties such as limited flavor development and acidification potential (Holzapfel *et al.,* 1995, Rodgers, 2008). Currently, the intended uses of commercially available protective cultures are often limited to the control of Gram-positive spoilage microorganisms and foodborne pathogens such as *L*. *monocytogenes* in cheese and meat products (Chr.Hansen, 2014, Zhang *et al.,* 2018, SACCO's Lyofast LPAL product). Accordingly, despite the significant improvements made in the past years to reduce pathogenic load in foods, there is a persisting need in the food industry, where consumers are demanding the use of more natural preservatives, for bioprotective agents with improved effect in reducing the amount of pathogenic organisms.

### BRIEF SUMMARY

In the present disclosure, live *Hafnia alvei* strains are added to a food product or used in the preparation of a food produce to prevent or impede the development of resident pathogenic bacteria or the colonization by a pathogenic bacteria and/or to reduce the concentration of pathogenic bacteria, such as *Salmonella* species or *Staphylococcus* species in a food product.

According to a first embodiment, the present disclosure provides a protective culture comprising an effective amount of at least one strain of *Hafnia alvei* for preventing, inhibiting or reducing the growth of at least one foodborne pathogenic bacteria and/or associated toxin production in a final food product. In an embodiment, said at least one foodborne pathogenic bacteria belongs to the genus *Salmonella* or *Staphylococcus* or a mixture thereof. In another embodiment, said at least one foodborne pathogenic bacteria belongs to the species *Salmonella enterica* or *Staphylococcus aureus* or a mixture thereof. More specifically, said *Salmonella enterica* is *S. enterica* subsp. *enterica* serovar Typhimurium or *S. enterica* serovar Newport. In an embodiment, the final food product is meat, dairy products, vegetables, fruits or grains. In an embodiment, the food product is a dairy product. In an embodiment, the final food product is a fermented food product which is made of raw milk or pasteurized milk. In a preferred embodiment, the fermented food product is made of raw milk.

According to a second embodiment, the present disclosure is directed to the use of an effective amount of at least one strain of *Hafnia alvei* for preventing, inhibiting or reducing the growth of at least one foodborne pathogenic bacteria and/or the increase in concentration of an associated toxin production in a final food product. In an embodiment, the at least one foodborne pathogenic bacteria belongs to the genus *Salmonella* or *Staphylococcus* or a mixture thereof. In an embodiment, the at least one foodborne pathogenic bacteria belongs to the species *Salmonella enterica* or *Staphylococcus aureus* or a mixture thereof. In an embodiment, *Salmonella enterica* is *S. enterica* subsp. *enterica* serovar Typhimurium or *S. enterica* serovar Newport. In an embodiment, the final food product is meat, dairy products, vegetables, fruits or grains. In an embodiment, the final food product is a dairy product. In an embodiment, the final food product is a fermented food product and is made of raw milk or pasteurized milk. In a preferred embodiment, the fermented food product is made of raw milk. In an embodiment, the least one strain of *H. alvei* is *H. alvei* B16 deposited with the CNCM (Collection nationale de cultures de microorganismes, Institut Pasteur, 25-28 rue du Docteur Roux, 75724 Paris Cedex 15, FRANCE) under the number CNCM I-4710 on December 12, 2012.

According to a third embodiment, the present disclosure is directed to a method for reducing preventing or inhibiting the growth of at least one foodborne pathogenic bacteria and/or the increase in concentration of an associated toxin production in a final food product. The method comprises contacting a constituent of the food product, the product itself, and/or packaging of the product with a protective culture comprising at least one strain of *Hafnia alvei.* In an embodiment, the at least one foodborne pathogenic bacteria belongs to the genus *Salmonella* or *Staphylococcus* or a mixture thereof. In an embodiment, the at least one foodborne pathogenic bacteria belongs to the species *Salmonella enterica* or *Staphylococcus aureus* or a mixture thereof. In an embodiment, the *Salmonella enterica* is *S. enterica* subsp. *enterica* serovar Typhimurium or *S. enterica* serovar Newport. In an embodiment, the final food product is meat, dairy products, vegetables, fruits or grains. In a preferred embodiment, the final food product is a dairy product. In an embodiment, the final food product is a fermented food product. In an embodiment, the fermented food product is made of raw milk or pasteurized milk. In a preferred embodiment, the fermented food product is made of raw milk. In yet another embodiment, the method comprises fermenting a food material or a food matrix with the at least one protective culture comprising *Hafnia alvei.* In still another embodiment, the method further comprises adding a starter culture, an adjunct culture, a ripening culture or a mixture thereof to the food material, before the fermentation of the fermented food product. In an embodiment, the least one strain of *H. alvei* is *H. alvei* B16 deposited with the CNCM under the number CNCM I-4710 on December 12, 2012.

According to a fourth aspect, the present disclosure is directed to a method for producing a fermented food product, comprising (i) fermenting a food material with at least one protective culture comprising *Hafnia alvei.* In an embodiment, the protective culture is added together with a starter culture, an adjunct culture, a ripening culture or a mixture thereof to a food matrix, before the fermentation of the fermented food product. In an embodiment, the fermented food product is a fermented dairy product and is made of raw milk or pasteurized milk. In an embodiment, the fermented dairy product is made of raw milk.

In a fifth aspect, the present disclosure is directed to a fermented food product comprising at least one starter culture organism and at least one protective culture comprising *Hafnia alvei.* In an embodiment, the fermented food product is made of raw milk or pasteurized milk. In a preferred embodiment, the fermented food product is made of raw milk. In an embodiment, the method further comprises the addition of an adjunct culture, a ripening culture or a mixture thereof.

### FIGURES

Having thus generally described the nature of the invention, reference will now be made to the accompanying drawings, showing by way of illustration, a preferred embodiment thereof, and in which:

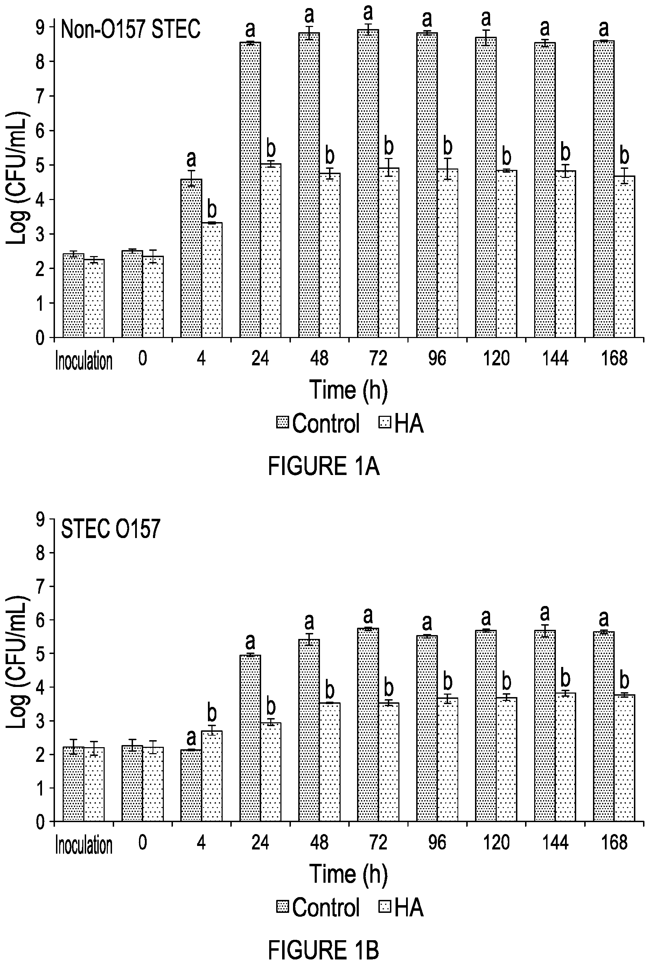

**Figures 1A to** C shows counts (log CFU/mL ± SD) of (**Fig**. **1A**) shiga toxin-producing *Escherichia coli* (STEC) O157:H7, (**Fig**. **1B**) non-O157:H7 STEC, and (**Fig**. **1C**) *Salmonella enterica* co-cultured with *Hafnia alvei* (HA) in raw milk during incubation following a cheese-making temperature profile. (Inoculation = time of pathogen inoculation prior to overnight refrigerated storage; ^{a-b} at each time-point, columns with different letters differ at P < 0.05).

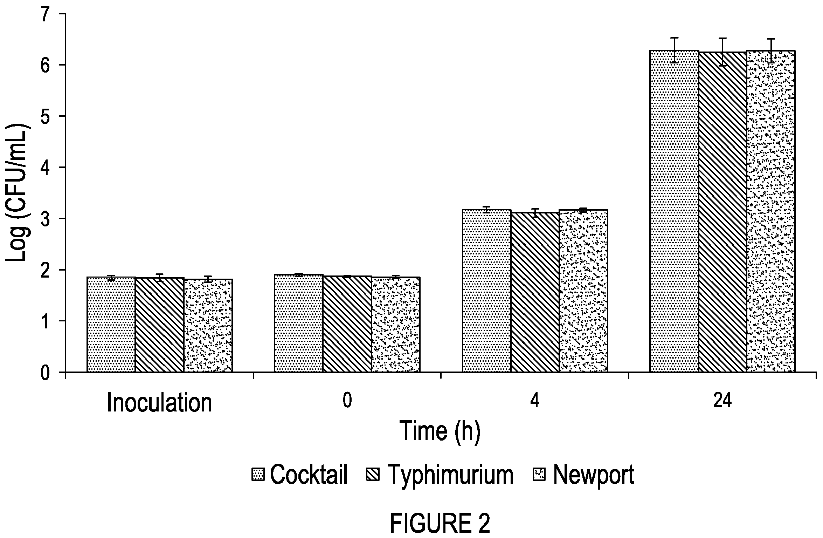

**Figure 2** shows counts (log CFU/mL ± SD) of *Salmonella enterica* serovars (Typhimurium or Newport) or a cocktail thereof, in raw milk during incubation following a cheese-making temperature profile. (Inoculation = time of pathogen inoculation prior to overnight refrigerated storage; cocktail = both serovars combined).

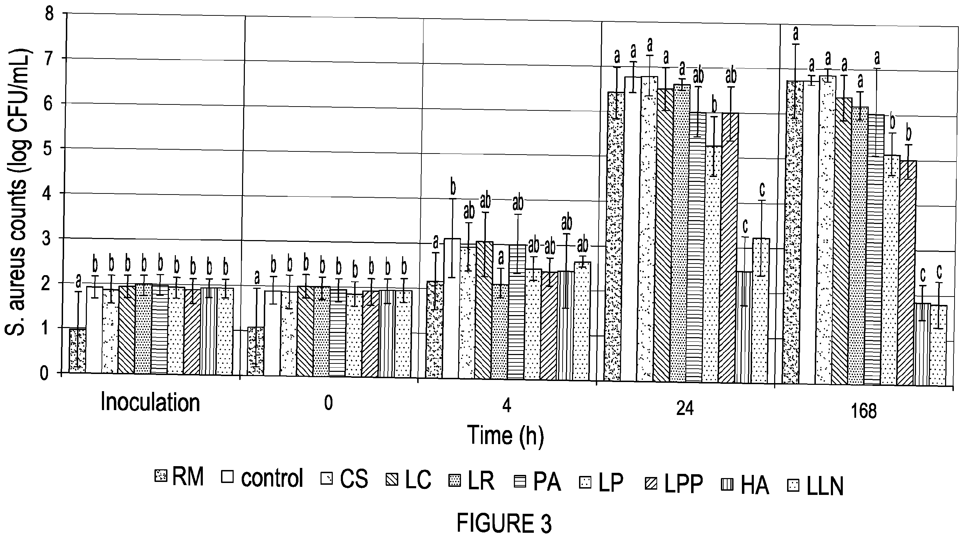

**Figure 3** shows counts (log CFU/mL ± SD) of *Staphylococcus aureus* co-cultured with different protective cultures in raw milk following cheese-making incubation and temperature profile. Results are shown at inoculation as well as time (hours) of pathogen inoculation prior to overnight refrigerated storage. The incubation temperature was at 35°C from time 0 to 4, at room temperature from 4 to 24, and at 12°C from 24 to 168 h. (RM = raw milk; Control = inoculated S. *aureus;* CS = *Carnobacterium* spp.; LC = *Lactobacillus curvatus;* LR = *Lb. rhemnosus;* PA, *Pediococcus acidiliacticii;* LP = *Lb. plantarum;* LPP = *Lb. plantarum;* HA = *Hafnia Alvia;* LLN = *Lactococcus Lactis).* ^{a-c} At each time-point, values with the same letter are not significantly different (P < 0.05)).

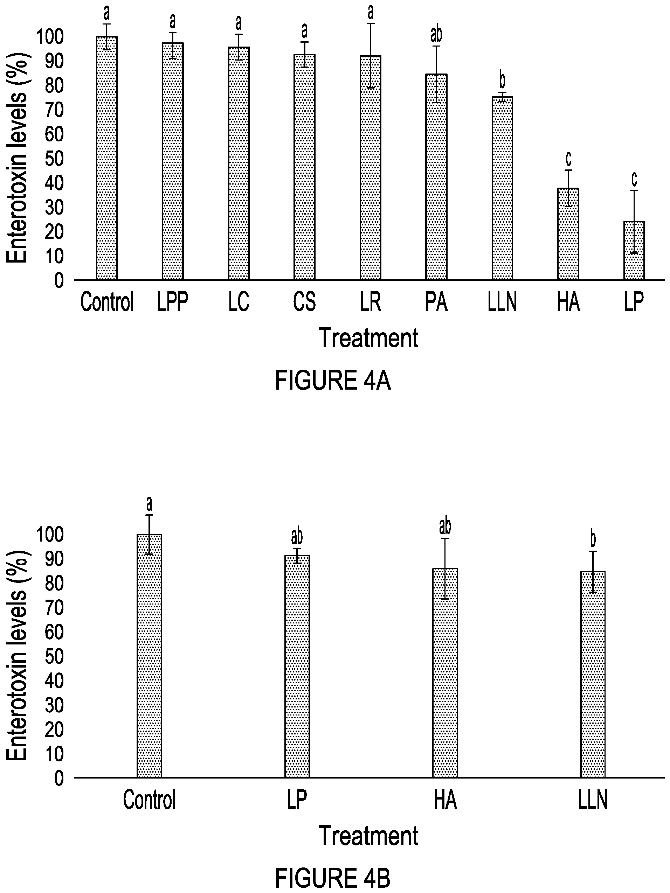

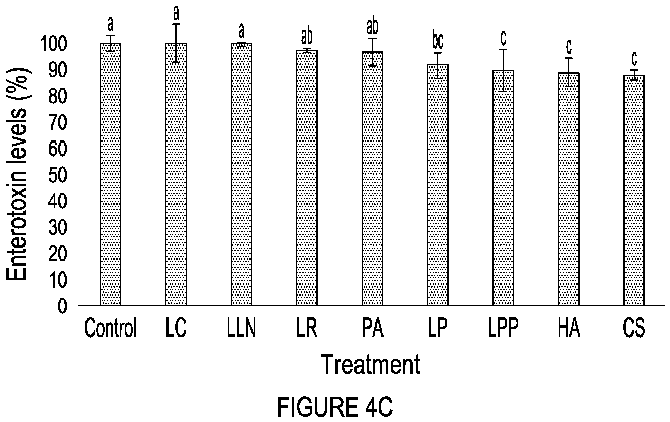

Figures 4A **to** C show levels of staphylococcal enterotoxin production (%) in co-culture with different protective cultures in raw milk (Fig. 4A & 4B) or Brain Heart Infusion (BHI) broth incubated at 37 °C for 24 h (Fig. 4C). (Fig. 4A) With inhibition of S. *aureus* growth in raw milk; (Fig. 4B) with no inhibition of S. *aureus* growth in raw milk; (**Fig**. **4C**) with no inhibition of S. *aureus* growth in BHI. (Control = inoculated S. *aureus;* CS, *Carnobacterium* spp.; LC, *Lactobacillus curvatus;* LR, *Lb. rhemnosus;* PA, *Pediococcus acidiliacticii;* LP, *Lb. plantarum;* LPP, *Lb. plantarum;* HA, *Hafnia Alvia;* LLN, *Lactococcus Lactis);* ^{a-c} Values with the same letter are not significantly different (P < 0.05).

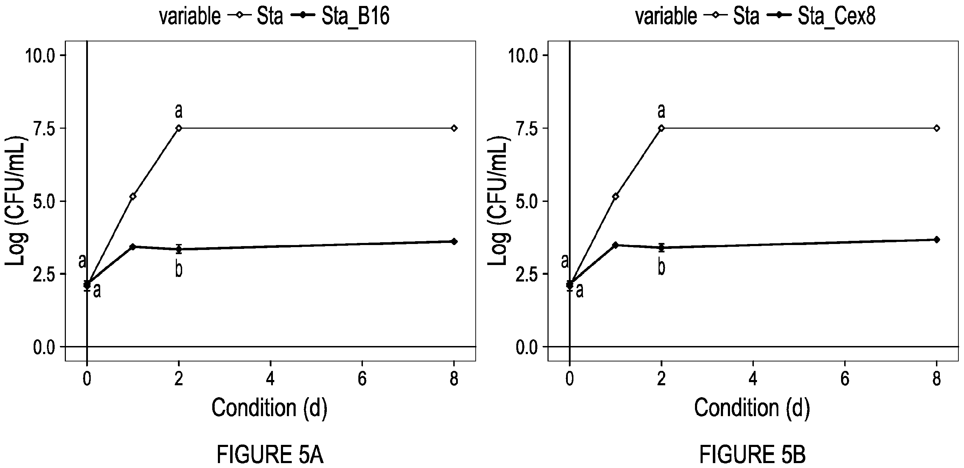

**Figures 5A to G** show the growth of *Staphylococcus aureus* Sa15 on cheese model curd cultured in presence (thick line) or absence (thin line) of (**Fig**. **5A**) *Hafnia alvei* strain B16, (**Fig**. **5B**) *H. alvei* strain Cex8, (**Fig**. **5C**) *H. alvei* strain Liv2, (**Fig**. **5D**) *H*. *alvei* strain Pb1, (**Fig**. **5E**) *H. alvei* Ra3, (**Fig**. **5F**) *H. alvei* DSM 30 153 and (**Fig**. **5G**) *H. alvei* Roc4 in relation with the incubation time (0, 1, 2 and 8 days). ^{a-b} Values with the same letter are not significantly different (P < 0.05).

### DETAILED DESCRIPTION

The present disclosure concerns protective cultures of the species *Hafnia alvei* capable of controlling or reducing pathogenic bacteria activity in food products and, therefore, to ensure or secure their microbial safety.

As is apparent from the examples below, it was determined that *Hafnia alvei* species prove to be especially useful for controlling the growth of multi-drug resistant *Salmonella sp.* strains as well as for controlling both *Staphylococcus aureus* strains growth and associated enterotoxins release compared to what is observed with un-inoculated raw milk.

Prior to a discussion of the detailed aspects and embodiments of the invention a definition of specific terms used herein is provided.

The term "protective culture" or "bioprotective agent" as used herein refers to natural bacterial species that have GRAS (Generally regarded As Safe) status or that are recognized as being of low virulence. Such bacterial species were selected for their ability to inhibit the growth and activity of pathogenic organisms when mixed and/or co-cultured in a determined medium. Protective cultures can either consist of a single strain or a mixture of strains belonging to the same or different genera or species. Protective cultures are not intended to change the sensory properties of a food product. In other words, a "protective culture" or "bioprotective agent" is a live organism that exerts its bioprotective effect when added to a food matrix or a food product without adversely affecting the food matrix and/or the organoleptic properties of the food product.

The term "effective amount" as used herein is meant to be an amount or quantity or concentration of protective culture (i.e. of at least one strain or a composition comprising at least one strain) which is sufficient to produce the expected effect and, more particularly, which gives rise to an inhibition of the bacterial growth of a microorganism or a reduction of the number of bacteria in the food product. The amount of inhibition or the reduction can be measured by any methods known in the art.

The term "food product" or "food material" as used herein refers to any food that is susceptible to bacterial growth and proliferation of pathogenic bacteria. Such food products include, but are not limited to, meat, dairy products, eggs, vegetables (sprouts), fruits and grains as well as mixtures thereof.

As used herein, the term "meat" refers to any meat product or meat by-product (including those processed) from an animal which is consumed by humans or animals. The meat products can also be fermented as, for example, sausages, e.g., spreadable and dried sausages, ham, and fermented fish.

The term "dairy product" as used herein is intended to include any food product made using milk or milk products, including, but not limited to, milk, yogurt, ice cream, cheese, butter, and cream (as well as mixtures thereof). In a preferred embodiment, the dairy product is a fermented dairy product.

The term "milk" is to be understood as the lacteal secretion obtained by milking any mammal, such as, but not limited to, cows, sheep and goats. The term milk also includes protein/fat solutions made of plant materials, e.g. soy milk.

In an embodiment, the food material which can be preserved in the context of the present disclosure are raw milk, pasteurized milk or cream of various milk or vegetable fat made of plant materials. As used herein, the term "raw milk" refers to unpasteurized milk, milk that has not been heated to a specific temperature for a determined amount of time in an effort to limit its bacterial content (such as its pathogenic bacterial content).

More particularly, the term "milk" may be any raw and/or processed milk material that can be subjected to fermentation according to methods known in the art. Examples include, but are not limited to, solutions/suspensions of any milk or milk like products comprising protein, such as whole or low fat milk, skim milk, buttermilk, reconstituted milk powder, condensed milk, dried milk, whey, whey permeate, lactose, mother liquid from crystallization of lactose, whey protein concentrate, or cream.

Prior to fermentation, the milk substrate may be homogenized and pasteurized according to methods known in the art.

As used herein, the term "fermentation" refers to the process of biochemical changes, e.g., an acidification in animal and/or plant material (i.e. a food matrix), involving activity of live microbial cells under aerobic and/or anaerobic conditions to obtain a food product of desired quality. For example, fermentation in the context of the present disclosure comprises conversion of lactose to lactic acid.

Fermentation processes to be used in production of dairy products are well known and the person skilled in the art will know how to select suitable process conditions, such as temperature, oxygen, amount and characteristics of microorganism(s) and process time. Obviously, fermentation conditions are selected in order to obtain the desired dairy product or fermented dairy product, i.e. in solid (such as a cheese) or liquid form (such as a fermented milk product).

The composition and method of the present disclosure provide the advantage of preventing, inhibiting or reducing the growth of pathogenic bacteria or foodborne pathogen in a food material.

The term "foodborne pathogenic bacteria" or "pathogenic bacteria" as used herein refers mainly to any food poisoning organism that is responsible of diseases or illness in animals or humans. The term "food-borne/foodborne pathogenic bacteria" will be understood to include bacteria that infect the food product (for instance a dairy product or milk or raw milk) and thereby cause disease or illness, as well as bacteria that produce toxins (*e.g*., associated toxins) that cause disease or illness. The "foodborne pathogenic bacteria" may be present at any point in the lifetime of a food product, for example: the environment from which the food product was obtained or produced and/or the microbiological quality of the product in its raw or unprocessed state (*e.g.,* native to the product), and/or any handling, processing steps (*e.g.,* manufacture, aging or ripening), ingredients, the packaging, and/or storage conditions of the food product. The foodborne pathogenic bacteria can be a gram-positive bacteria. The foodborne pathogenic bacteria can be a gram-negative bacteria. Specific examples of bacterial foodborne pathogen include, without limitation, *Aeromonas caviae; Aeromonas hydrophila; Aeromonas sobria; Bacillus cereus; Campylobacter jejuni; Citrobacter* ssp.; *Clostridium botulinum; Clostridium perfringens; Enterobacter* ssp.; *Enterococcus* ssp.; *Escherichia coli* enteroinvasive strains; *Escherichia coli* enteropathogenic strains; *Escherichia coli* enterotoxigenic strains; *Escherichia coli* O157:H7; *Klebsiella* ssp.; *Listeria monocytogenes; Plesiomonas shigelloides; Salmonella* ssp.; *Shigella* ssp.: *Staphylococcus aureus; Streptococcus* ssp.; *Vibrio cholerae; Yersinia enterocolitica.* While it is not intended that the present disclosure be limited to any particular genera of pathogen, exemplary species and strains for the present disclosure includes, but are not limited to *Salmonella enterica* (as, for example, *S. enterica* subsp. *enterica* serovar Typhimurium or *S. enterica* serovar Newport), *Staphylococcus aureus* and/or *Listeria monocytogenes.*

As used herein, the terms "to inhibit" and "to reduce" can be used interchangeably in relation to pathogenic bacteria and means, for example, that the growth or the number or the concentration of pathogenic bacteria in food products and/or on the surface of food products comprising the protective culture according to the present disclosure, is lower than in food products and/or on the surface of food products which do not comprise such protective culture. For example, the term "inhibit" or "reduce" means to impede, destroy, prevent, control, decrease, slow, or otherwise interfere with the growth or survival of a pathogenic microorganism by at least about 3%, 10%, 15%, 20%, 25%, 30%, 35%, 40%, 45%, 50%, 55%, 60%, 65%, 70%, 75%, 80%, 85%, 90%, 95%, 99%, 99.1%, 99.2%, 99.3%, 99.4%, 99.5%, 99.6%, 99.7%, 99.8%, 99.9% or 100% when compared to the growth or survival of the pathogenic microorganism in an untreated control (*e.g*., in the absence of the protective culture).

In the context of the present disclosure, the term "prevent" means to keep from happening or existing or hindering the contamination from occurring.

In the present context, the term "contacting" includes both direct and indirect contact.

It has been demonstrated that strains of *H. alvei* are useful for reducing and/or inhibiting the amount and/or activity of pathogenic bacteria, in particular *Salmonella* sp. and *S. aureus.*

It has been shown that the reduction in pathogenic bacteria may be provided by mixing or contacting a food material or a food product containing or not pathogenic bacteria with a *H. alvei* strains.

It is contemplated that any strains or a combination of strains of *Hafnia alvei* can be used in the context of the present disclosure. These rod-shape bacteria are Gram-negative and optionally anaerobic. Naturally, the present disclosure relates to the use of a nonvirulent, non-pathogenic strain(s) of *H. alvei.* While it is not intended that the present disclosure be limited to any particular strains of *H. alvei,* exemplary species and strains of *H. alvei* for the present disclosure includes, but are not limited to, the following strain: LALCULT® Protect *Hafnia alvei* B16 (Lallemand), deposited with the CNCM under the number CNCM I-4710. In an embodiment, the strain is *Hafnia alvei* B16 deposited under the number CNCM I-4710 on December 12, 2012.

In one aspect the disclosure thus provides a protective composition comprising at least one strain of *H. alvei.* The composition typically comprises the bacteria in a concentrated form including frozen, dried or freeze-dried concentrates typically having a concentration of viable cells, which is in the range of 10⁴ to 10¹² cfu (colony forming units) per gram of the composition including at least 10⁴ cfu per gram of the composition, at least 10⁵ cfu/g, at least 10⁶ cfu/g, at least 10⁷ cfu/g, at least 10⁸ cfu/g, at least 10⁹, at least 10¹⁰ cfu/g or at least 10¹¹ cfu/g. The composition may also be a liquid that is obtained after suspension of the frozen, dried or freeze-dried cell concentrates in a liquid medium such as water or a phosphate-buffered saline (PBS) buffer. Where the composition of the invention is a suspension, the concentration of viable cells is in the range of 10⁴ to 10¹² cfu (colony forming units) per ml of the composition including at least 10⁴ cfu per ml of the composition, at least 10⁵ cfu/g, at least 10⁶ cfu/g, at least 10⁷ cfu/g, at least 10⁸ cfu/g, at least 10⁹, at least 10¹⁰ cfu/g or at least 10¹¹ cfu/g.

The at least one strain of *H. alvei* can be formed into a blended composition in a variety of different ways known to those skilled in the art.

The composition of the present disclosure may be used in connection with any food product or food material (and even pharmaceutical product) which is susceptible to microbial contamination. In particular, the composition of the present disclosure is used in connection with dairy product and/or meat (which can optionally be fermented). In an embodiment, the composition of the present disclosure is for use as an ingredient in the preparation of a dairy product (or a fermented dairy product) such as cheese and the like.

In another aspect, the present disclosure relates to a method for manufacturing a food product comprising adding at least one *H. alvei* strain or a composition comprising at least one strain of *H. alvei* during the manufacture of the food product. Preferably, the method also comprises the step of controlling the manufacturing parameters during the manufacturing such that the concentration of the at least one *H. alvei* strain remains constant or is increased.

In an embodiment, during the manufacturing of the food product, the concentration of the at least one strain of *H. alvei* is at least 10⁴ cfu/g, at least 10⁵ cfu/g, at least 10⁶ cfu/g, at least 10⁷ cfu/g, at least 10⁸ cfu/g, at least 10⁹, at least 10¹⁰ cfu/g or at least 10¹¹ cfu/g of the food product.

The at least one strain or the composition according to the present disclosure is most readily used by contacting, mixing with and/or applying on a food matrix or a blendable food. In an embodiment, the at least one strain or the composition according to the present disclosure can also be used and be effective to treat the surface of solid food products, or the interior of such products, e.g. by injection. The key criteria of the present disclosure is that the at least strain or composition of the present disclosure be in contact or available to the surface subject to contamination with pathogenic bacteria. In still another embodiment, the at least one strain or composition of the present disclosure may be indirectly placed into contact with the food surface of the food product by applying the composition to food packaging (e.g. food grade films) and thereafter applying the packaging to the food surface of the food product. Ultimately, the at least one strain or composition of the present disclosure may be also applied to a food processing equipment. The optimum amount to be used will depend on the composition of the particular food product to be treated and the method used for applying the composition to the food surface, but can be readily determined by the skilled person in the art using simple experimentation.

In a preferred embodiment, the method of the present disclosure comprises one or more fermentation steps and the at least one *H. alvei* strain or the composition of the present disclosure may be added to a food matrix (or a food material) prior to, during or after such one or more fermentation steps.

For example, the method of the present disclosure comprises the fermentation of a substrate, such as a milk substrate (e.g. raw milk), in the presence of at least one *H*. *alvei* strain or composition according to the present disclosure for a period of time sufficient for the appearance of antipathogenic activity of the at least one *H. alvei* strain according to the present disclosure. In a further embodiment, the method of the present disclosure comprises fermenting a milk substrate (*e.g*. raw milk) with, for example, a starter culture optionally in the presence of the protective culture.

This antipathogenic activity of the protective culture has the effect of reducing or inhibiting the development of pathogenic bacteria in the product (as, for example, the raw milk) fermented with the at least one strain.

In another embodiment, the present disclosure provides a method for inhibiting or reducing the concentration of the growth of pathogenic bacteria (e.g. *Salmonella* sp. and *S. aureus)* in a food product. In an embodiment, the food product is a fermented food product. It is also understood that the protective cultures of the present disclosure can be used to reduce pathogen enterotoxins release/accumulation in food product when compared with untreated control. In at least some the inhibition is by at least 2% compared to an untreated control. In certain embodiments, the inhibition or reduction is by at least at least about 3%, 10%, 15%, 20%, 25%, 30%, 35%, 40%, 45%, 50%, 55%, 60%, 65%, 70%, 75%, 80%, 85%, 90%, 95%, 99%, 99.1%, 99.2%, 99.3%, 99.4%, 99.5%, 99.6%, 99.7%, 99.8%, 99.9% or 100% as compared to an untreated control (e.g., in the absence of the protective culture). The effective amount can be administered in one or more doses.

In certain applications, it may be satisfactory to reach a "stabilization" of the concentration of a pathogenic bacteria that may be present in the food matrix, food material or food product. This "stabilization" will be sufficient to render or keep the food safe. Thus, the protective culture secures that the pathogenic bacteria that are present in the food matrix or food product do not substantially increase in numbers during manufacture and/or storage.

Pathogen-contaminated food does not necessarily show any specific sign (of spoilage for example). Bacterial food poisoning may be caused by either infection of the food material of the food product by the pathogenic bacteria or by action of the toxin produced by the bacteria in the food material or food product.

In an embodiment, the method of the present disclosure may comprise the basic following steps:
(i) providing a food material or a food matrix (or a constituent of a final food product); and
(ii) mixing or contacting the food material or the food matrix (or the constituent of a final food product) with at least one protective culture in form of at least one *H. alvei* strain.

The methods of the present disclosure may also comprise the basic following steps:
(i) providing a food material or a food matrix (or a constituent of a final food product);
(ii) mixing or contacting the food material or the food matrix with at least a starter culture;
(iii) mixing or contacting the food material with at least one protective culture in form of a at least one *H. alvei* strain,
(iv) subjecting the mixture provided in step (iii) to a fermentation process. In an embodiment, said fermentation process is conducted at conditions that are optimal for the growth of the starter culture and *H. alvei* strain in order to obtain the fermented food product.

Alternatively, the protective culture may be putted in contact, in combination or in conjunction with the starter culture, an adjunct culture, a ripening culture or a mixture thereof.

In some embodiments, the methods of the present disclosure can include fermenting the food material with the protective culture (alone or in combination with a starter culture).

As used herein, the term "in combination with or in conjunction with" means together, substantially simultaneously or sequentially. In another embodiment, the protective culture is putted in contact with a food material or a food product after the fermentation.

In another aspect, the present invention relates to a food product obtainable by the method according to the present disclosure.

The present disclosure also relates to the use of at least *H. alvei strain* for inhibiting or reducing the growth of pathogenic bacteria in food products. In another aspect, the present disclosure is directed to the use of at least *H. alvei* strain for preparing a food product. In an embodiment, the food product is a fermented food product. Preferably, the fermented food product is a cheese such as, but not limited to, a Cottage, Feta, Cheddar, Parmesan, Mozzarella, Emmental, Gouda, Edam, Feta-type, blue cheese, Camembert or Brie.

Furthermore, food products can be treated with at least one *H. alvei* strain or composition of the present disclosure to suppress growth of any pathogenic microorganism already present in the food product and to prevent or reduce the possibility of subsequent viable infection by such microorganisms. The food products can be sprayed, dipped, or brushed with a suitable dilution of at least a strain of *H*. *alvei* or a composition of the present disclosure before packaging.

The word "comprising" in the claims may be replaced by "consisting essentially of" or with "consisting of", according to standard practice in patent law.

The present invention will be more readily understood by referring to the following examples which are given to illustrate the invention rather than to limit its scope.

### EXAMPLES

### Pathogens preparation for raw milk experiments

Multi-drug resistant (MDR) *Salmonella enterica subsp. enterica serovar Typhimurium* (MDR-ST; FSL A4-533, FSL S5-384, FSL S5-786) and MDR S. *enterica serovar Newport* (MDR-SN; FSL R6-956, FSL S5-436, FSL S5-601) comprised the *Salmonella* cocktail. A "cocktail" of six *Staphylococcus aureus* strains isolated from a variety of sources with diverse enterotoxin production was used. S. *aureus* strains (source and toxin produced) included the following: 148-11 (milker skin; SEA and SEC), 611-5-3 (raw cow milk; SED), 611-3-1 (raw cow milk; SEC), 366-4 (sheep; SEC), 948-4-1 (goat; SEC), and MW2 (human; SEA and SEC). Frozen (-80°C) stock cultures of each strain were streaked onto chromogenic agar specific for each target (i.e., CHROMagar *Salmonella* and CHROMagar *S. aureus*) (DRG International, Inc, NJ) and grown overnight at 37°C. A single typical colony of each *Salmonella* strain was transferred to 9 mL of trypticase soy broth with 0.6% yeast extract added (TSBYE; BD Difco, Sparks, MD) and incubated overnight at 37°C for two subsequent transfers prior to use. A single typical colony of each *S. aureus* strain into 9 mL of brain heart infusion (BHI) broth (BD Difco, Sparks, MD) and incubated at 37°C for 24 h. Separate cocktails of each pathogen were prepared by combining equal volumes (1 mL) of the overnight broth from each respective strain. Cocktails were then centrifuged (10 min, 4000 x g, 4°C), the supernatant was discarded and the pellet was washed twice in buffered 0.1% peptone water (BPW). Upon completion, the cocktail was serially diluted to obtain the target concentration as described for each assay.

### Hafnia alvei protective culture preparation for raw milk experiments

LALCULT® Protect *Hafnia alvei* B16 (HA) (Lallemand) was selected based on its indicated use for controlling STEC in cheese, *Listeria monocytogenes* in dairy, *L*. *monocytogenes* on the cheese surface, *L. monocytogenes* in foods other than dairy products, or spoilage microorganisms in dairy, including cheese. Direct vat set cultures were inoculated in 10 mL of raw milk, allowed to hydrate for 30 min at 37°C, and serially diluted in raw milk to the target concentration for use.

### Raw milk preparation

Fresh raw milk was aseptically obtained from the bulk tank at the University of Connecticut Kellogg Dairy Center, transported directly to the laboratory, and placed in refrigerated storage at 4°C. As needed, raw milk was also purchased at retail (Baldwin Brook Farm, LLC, CT) and stored under refrigeration (4°C) before use. In all cases, milk was used within 72 hours of collection and 24 h of purchase.

### Determining the antimicrobial activity of Hafnia alvei protective culture in raw milk

The prepared pathogen cocktails were inoculated into duplicate bottles (Corning, NY) containing 30 mL of raw milk to achieve ∼2 log CFU/mL. Bottles were stored overnight at 4°C to allow the pathogens to adapt to the environment and simulate refrigerated storage of milk prior to cheese-making.

LALCULT® Protect *Hafnia alvei* B16 (HA) was then added at ∼7 log CFU/mL to raw milk bottles containing the pathogen cocktails or uninoculated controls. This inoculation level was selected based on common recommended dosages and usage levels provided by the manufacturers for use in cheese where applicable. Raw milk containing pathogens without added HA were used as positive pathogen controls, and un-inoculated raw milk was used as raw milk negative controls.
All treatments and controls were incubated at 35°C for 4 h and then left at room temperature (∼22°C) for 20 h. Thereafter, samples were held at 12°C (-95% relative humidity) in an environmental chamber (Model 7000, CARON Products & Services, Inc., OH) for six days to emulate cheese aging.

Samples were collected for bacterial enumeration and pH measurement at the time of pathogen inoculation prior to overnight storage, during co-culture at 0, 4, and 24 h after *H. alvei* inoculation, and then daily for six days. pH measurements were obtained using a pH-meter (Accumet AB150; Fisher Scientific International Inc.). At each time point, samples were serially diluted in PW. For the enumeration of STEC, *Salmonella* and *S. aureus,* samples were plated in duplicate on CHROMagar STEC, CHROMagar *Salmonella* and CHROMagar S. *aureus,* respectively, and incubated at 37°C for 24 or 48 h as recommended by the manufacturer.

CHROMagar *Salmonella* was supplemented with tetracycline (3 µg/mL) to inhibit the growth of *H. alvei* (all *Salmonella* strains used in this study were resistant to tetracycline). Samples were considered negative when no typical colonies were observed in both media. For the enumeration of *H. alvei,* dilutions were plated on MRS agar in duplicate and enumerated after incubation at 30°C for 48 h.

*H. alvei* protective culture counts were determined in order to verify target inoculation levels and to track changes in counts over time. All *H. alvei* counts were ∼7 log CFU/mL at the time of co-culture with pathogens (time 0). After 4 h incubation, HA counts were >7 CFU/mL in all co-culture trials. Whatever the pathogen test, *H. alvei* counts in co-culture did not differ from *H. alvei* counts in un-inoculated controls.

### Staphylococcal enterotoxin (SE) production in raw milk assays

The effect of HA on SE production was determined in raw milk and BHI medium. In both cases, 10 mL of each media was added to 15 mL centrifuge tubes (VWR International, LLC, USA) and inoculated with S. *aureus* at ∼5 log CFU/mL. HA was then added to the media at different concentrations as needed for each assay. The production of SEs was measured after 24 h incubation at 37°C using RIDASCREEN SET Total kit (R-Biopharm, Darmstadt, Germany). RIDASCREEN is a sandwich enzyme immunoassay (ELISA) for the combined detection of enterotoxins types A, B, C, D and E. The SE production was measured following the manufacturer's instructions. Briefly, each tube was centrifuged (10 min, 4000 x g, 10°C), and 100 µL aliquots of each supernatant was transferred into separate wells of a microtiter plate kit. After incubation at 37°C for 1 h, the liquid was removed out of the wells, and each well was washed with 300 µL of wash buffer for five times. Then, 100 µL of conjugate 1 was added to each well, and the microtiter plate was incubated at 37°C for another hour. The wells were washed again and filled with 100 µL of conjugate 2. After 30 min incubation at 37°C, the washing step was repeated, followed by the addition of 100 µL of chromogen and incubation at 37°C for 15 min. Stop solution (100 µL) was then mixed into each well, and the absorbance was measured at a wavelength of 450/630 nm in a computer-controlled microplate reader using Gen5 software version 2.06 (BioTek Epoch 2, BioTek Instruments, Inc., Winooski, VT). *S. aureus* enumeration and pH measurements were performed at the time of inoculation, at 6 h (mid-log growth phase) and at 24 h following the procedure explained in the previous section. Levels of PC inoculation were verified using spot-plate counts on MRS plates.

### Analysis

Raw milk bottles were considered as experimental units, and pathogen trials were analyzed separately. Experiments included technical replicates and were repeated at least three times, except when stated otherwise. Data points are expressed as mean ± standard deviation. A repeated measure design was used, where *H. alvei* was the treatment between subjects and repeated measure was carried out over the sampling time points. Analysis of variance for repeated measures was performed using the MIXED procedure of SAS (version 9.4; SAS Institute Inc., Cary, NC). The Tukey-Kramer method was used to determine differences between mean counts. Significance was determined at P<0.05. Optical density values obtained from enterotoxin assays were normalized to the control mean (set equal to 100). The threshold value was calculated by the addition of 0·15 to the negative control value. Analysis of variance was carried out using the MIXED procedure of SAS (version 9.4; SAS Institute Inc., Cary, NC). A repeated-measure function was applied for the data obtained over time. Experiments were repeated three times and the statistical difference was determined at P < 0.05.

### Example 1: Antimicrobial activity of Hafnia alvei (HA) protective cultures when co-cultured with E. coli STEC-O157 and non-O157 STEC in raw milk

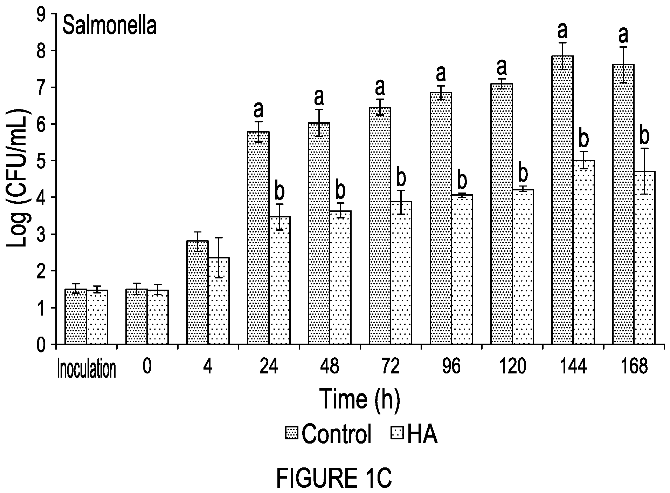

Previously described studies have demonstrated that *H. alvei* B16 was effective in controlling the growth of *E. coli* O26:H11 and *E. coli* O157:H7 in pasteurized and raw milk cheese (Delbès-Paus *et al.,* 2013, Callon *et al.,* 2016) and in reducing the transmission of these serotypes in ruminants (Forano *et al.,* 2015). Therefore, HA was included in raw milk co-culture experiments. As shown in Figure 1, HA inhibited the growth of 0157 and non-O157 STEC. A significant interaction between the effects of treatment and time was observed (*P* < 0.001). Significant differences in counts between non-O157 controls and HA co-cultures (P *<* 0.001) were observed as early as 4 h of incubation (Figure 1A). At 24 h, mean counts of non-O157 STEC in co-culture with HA were 3.5 log CFU/mL lower than control, which remained for the duration of incubation (Figure 1A). In contrast, counts of STEC 0157 were significantly higher than control after 4 h when co-cultured with HA (Figure 1B). However, mean counts in the control increased 2.83 log CFU/ml from hour 4 to hour 24 while mean counts in the HA treatment only increased 0.15 log CFU/mL over the same time period resulting in counts ∼2 log CFU/mL lower than control after 24 h (*P* < 0.001). Mean STEC 0157 counts in the HA co-culture remained ∼2 log CFU/mL lower than control for the remainder of the one-week incubation. These findings are similar with those reported by Callon *et al.* (2016) showing lower counts of *E. coli* O26:H11 (2.0 log CFU/mL) and *E. coli* O157:H7 (2.6 log CFU/mL) in HA co-culture than control in an uncooked pressed cheese made from raw or pasteurized milk, respectively. The production of lactic acid or hydrogen peroxide were not found to attribute to the inhibitory effect of HA (Delbès-Paus *et al.,* 2013, Callon *et al.,* 2016), hence the specific mechanism of inhibition remains to be identified.

### Example 2: Antimicrobial activity of Hafnia alvei protective cultures when co-cultured with Salmonella sp. in raw milk

Due to the observed inhibitory effect of *H. alvei* against STEC serotypes, *H. alvei* was included in *Salmonella* co-culture experiments. The growth of individual serovars and the cocktail were compared to determine differences in growth potential (Figure 2). Unlike STEC serotypes, no significant difference was observed between the cocktail counts over time and either serovar. Therefore, both serovars were included as a cocktail in co-culture experiments. Similar to our observations with STEC, *H. alvei* was inhibitory against *Salmonella* in co-culture with a significant interaction observed between the effects of treatment and time (P < 0.001). As shown in Figure 1C, mean *Salmonella* counts in co-culture with *H. alvei* were 2.31 log CFU/mL lower than control after 24 h of co-culture. The difference gradually increased throughout the one-week incubation reaching 2.9 log CFU/mL by day 7. Interestingly, mean *Salmonella* counts in the control increased during the 6 days of incubation at 12°C by 1.83 log CFU/mL, which was not observed with 0157 and non-O157 STEC.

### Example 3: Antimicrobial activity of Hafnia alvei (HA) protective cultures when co-cultured with enterotoxigenic Staphylococcus aureus (strains producing toxins A, C, and D) in raw milk

As shown in Figure 3, counts of artificially added S. aureusreached 6.77 log CFU/mL after 24 h and remained the same after one-week of incubation. Similarly, naturally occurring *S. aureus,* referred to as "raw milk control", was present in the raw milk control at ∼ 1 log CFU/mL at the beginning of the experiment. *S. aureus* in raw milk control grew up to 6.42 log CFU/mL and 6.73 log CFU/mL after 1 and 7 days of incubation, respectively. *S. aureus* counts in HA co-culture increased by only 0.55 log CFU/mL from the initial inoculation (∼2 log CFU/mL) at 24 h, resulting in counts lower than raw milk and pathogen controls by 3.94 and 4.29 log CFU/mL, respectively (P < 0.001). After one week, mean counts in treatment group declined to 1.48 log CFU/mL, with both controls reaching -6.7 log CFU/mL.

### Example 4: Effect of Hafnia alvei on Staphylococcus aureus enterotoxins production (toxins A, C, and D) in raw milk

The protective culture HA was also tested for its ability to inhibit staphylococcal enterotoxin (SE) production. HA was inoculated in raw milk at ∼6 log CFU/mL, to allow *S. aureus* to grow to levels similar to that of the control. As shown in Figure 4A, at 24 h, mean counts of *S. aureus* in HA co-culture (6.93 log CFU/mL) were significantly lower than the control (8.27 log CFU/mL) and SE levels were 62.4% lower than the control (P < 0.001). It is possible that the reduction in SE production resulted from the decrease in *S. aureus* counts, rather than the direct interaction between the pathogen and HA. To control this potential bias, the inoculation level of HA was adjusted to ∼ 3 log CFU/mL, corresponding to the determined concentration that do not inhibit *S. aureus* growth. Correspondingly, levels of SE production in HA treatments were lower but not statistically significant (Figure 4B). These findings suggest that there is a strong association between SE levels and *S. aureus* counts in co-culture.

The presence of autochthonous microbes in raw milk, and the type of the food substrate might influence the behavior of HA and the indicator pathogen in a positive or negative manner. Therefore, the effect of HA on SE production was further determined in BHI broth to examine their potential to control the production of SEs in other food application. HA concentrations that do not inhibit the pathogen growth were first determined. Then, similar experiment as above was performed and HA culture was inoculated at 3 log CFU/mL while the growth levels of *S. aureus* in co-culture matched those observed in the control (Table 1). A significant reduction (11.2%) in SE production was observed (Figure 4C). These results highlight the potential use of HA to control pathogens of concern and thus improve the safety of raw milk cheese.

**Table 1. Counts (log CFU/mL ± SD) of S. aureus in staphylococcal enterotoxin production assays after co-culturing with different protective cultures in raw milk (A and B) or Brain Heart Infusion (C) broth and incubated at 37 °C for 24 h.**

| Growth medium | Time (h) | Treatments | | | | | | | | | |
|---|---|---|---|---|---|---|---|---|---|---|---|
| | | None | Control | LPP | LC | CS | LR | PA | LLN | LP | HA |
| Raw milk | 0 | 1.30 ± 0.42^{a} | 4.75 ± 0.23^{b} | 4.80 ± 0.12^{b} | 4.79 ± 0.09^{b} | 4.76 ± 0.15^{b} | 4.79 ± 0.08^{b} 6.91± | 4.77 ± 0.06^{b} | 4.71 ± 0.14^{b} | 4.69 ± 0.18^{b} | 4.72 ± 0.16^{b} |
| | 6 | 4.87 ± 0.28^{a} | 7.09 ± 0.14^{b} | 0.35^{b} | 0.4^{b} | 6.78 ± 0.49^{b} | 0.35^{b} 8.18 | 7.09±0.05^{b} | 0.22^{b} | 0.42^{b} | 6.25 ± 0.06^{b} |
| | 24 | 7.22 ± 0.45^{a} | 8.27 ± 0.22^{b} | 8.25 ± | 8.19 ± 0.8^{b} | 7.88 ± 0.27^{b} | 0.04^{b} | 8.22±0.09^{b} | 7.28 ± 0.31^{a} | 7.08 ± | 6.93 ± 0.59^{a} |
| Raw milk | 0 | ND | 4.78 ± 0.09 | 0.11^{b}ND | ND | ND | ND | ND | 4.79 ± 0.14 | 0.63^{a} 4.86 ± 0.17 | 4.73 ± 0.05 |
| | 6 | ND | 6.93 ± 0.39 | ND | ND | ND | ND | ND | 6.80 ± 0.55 | 6.79 ± 0.42 | 6.84 ± 0.44 |
| | 24 | ND | 7.78 ± 0.41 | ND | ND | ND | ND | ND | 796 ± 0.22 | 8.19 ± 0.1 | 7.85 ± 0.3 |
| BHI | 0 | ND | 4.73 ± 0.07 | 4.70 ± 0.15 | 4.71 ± 0.11 | 4.67 ± 0.08 | 4.70 ± 0.15 | 4.68±0.1 | 4.67 ± 0.11 | 4.69 ± 0.12 | 4.71 ± 0.07 |
| | 6 | ND | 7.15 ± 0.18 | 7.13 ± 0.36 | 7.10 ± 0.32 | 6.85 ± 0.16 | 7.08 ± 0.24 | 6.98 ± 0.14 | 6.87 ± 0.32 | 7.05 ± 0.35 | 6.94 ± 0.09 |
| | 24 | ND | 9.12 ± 0.17 | 9.15 ± 0.09 | 9.13 ± 0.23 | 9.02 ± 0.1 | 9.09 ± 0.15 | 9.03 ± 0.19 | 8.97 ± 0.03 | 9.11 ± 0.16 | 9.05 ± 0.15 |

| | | | | | | | | | | | |
|---|---|---|---|---|---|---|---|---|---|---|---|
| None, naturally occurring *S*. *aureus;* Control, inoculated *S*. *aureus;* CS, *Carnobacterium* spp.; LC, *Lactobacillus curvatus;* LR, *Lb. rhemnosus;* PA, *Pediococcus acidiliacticii;* LP, *Lb. plantarum;* LPP, *Lb. plantarum;* HA, *Hafnia Alvia;* LLN, *Lactococcus Lactis* At each time point, values with the same letter are not significantly different (*P* < 0.05). No significant differences between columns without letters. Data obtained from different growth mediums were analyzed separately. | | | | | | | | | | | |

The overall pH range supporting SE production is generally narrower than the one supporting S. *aureus* growth. The production of SE has been reported at pH values as low as 4.0 in the growth medium, but a pH higher than 5.0 is generally required for SE production in dairy products. In the present example, the pH of raw milk control was 6.68 at 6 h and dropped to 6.14 after 24 h of incubation (Table 2). Under the same conditions in BHI broth, the pH of the pathogen control was higher at 6 h (7.03), but lower at 24 h (5.82). In both media, pH values remained similar to that of controls after co-culturing with different PCs. In contrast to these results, *Zdenkova et al*. (2016) reported a significant decrease in pH values (≥ 1.36 unit) of co-culture (*S. aureus* with different LAB) than those of monoculture (*S*. *aureus* alone) after 24 h incubation at 37°C in laboratory medium. Overall, PCs showed a limited acidification potential in raw milk and pH medium, and their effects on SE production was not associated with pH values.

**Table 2. pH values (± SD) of S. aureus in staphylococcal enterotoxin production assays after co-culturing with different protective cultures in raw milk or Brain Heart Infusion (BHI) broth and incubated at 37 °C for 24 h.**

| Growth medium | Time (h) | Treatments | | | | | | | | | |
|---|---|---|---|---|---|---|---|---|---|---|---|
| | | None | Control | LPP | LC | CS | LR | PA | LLN | LP | HA |
| A | 6 | 6.68 ± 0.03 | 6.67 ± 0.06 | 6.64 ± 0.01 | 6.66 ± 0.03 | 6.62 ± 0.02 | 6.67 ± 0.01 | 6.65 ± 0.01 | 6.64 ± 0.03 | 6.66 ± 0.03 | 6.67 ± 0.04 |
| | 24 | 6.14 ± 0.06 | 6.05 ± 0.03 | 6.06 ± 0.03 | 6.07 ± 0.05 | 6.12 ± 0.06 | 6.09 ± 0.03 | 6.24 ± 0.31 | 6.00 ± 0.06 | 6.10 ± 0.06 | 6.02 ± 0.02 |
| | | | | | | | | | | | |
| B | 6 | ND | 6.77 ± 0.06^{a} | ND | ND | ND | ND | ND | 6.57 ± 0.06^{b} | 6.72 ± 0.04^{a} | 6.71 ± 0.14^{a} |
| | 24 | ND | 6.32 ± 0.1^{a} | ND | ND | ND | ND | ND | 5.85 ± 0.21^{b} | 6.02 ± 0.12^{b} | 6.35 ± 0.08^{a} |
| | | | | | | | | | | | |
| C | 6 | ND | 7.03 ± 0.09 | 7.05 ± 0.08 | 7.10 ± 0.14 | 7.06 ± 0.07 | 7.10 ± 0.1 | 7.08 ± 0.1 | 7.09 ± 0.12 | 7.06 ± 0.1 | 7.09 ± 0.11 |
| | 24 | ND | 5.82 ± 0.09 | 5.82 ± 0.17 | 5.86 ± 0.03 | 5.81 ± 0.01 | 5.87 ± 0.07 | 5.86 ± 0.05 | 5.81 ± 0.06 | 5.83 ± 0.05 | 5.96 ± 0.03 |

| | | | | | | | | | | | |
|---|---|---|---|---|---|---|---|---|---|---|---|
| None, raw milk control; control, pathogen control; CS, *Carnobacterium* spp.; LC, *Lactobacillus curvatus*; LR, *Lb. rhemnosus;* PA, *Pediococcus acidiliacticii;* LP, *Lb. plantarum;* LPP, *Lb. plantarum;* HA, *Hafnia Alvia;* LLN, *Lactococcus Lactis* At each time-point, values with the same letter are not significantly different (*P* < 0.05). No significant differences between columns without letters. Data obtained from different growth mediums were analyzed separately. | | | | | | | | | | | |

### Example 5: pH measurements of Hafnia alvei (HA) incubated raw milk

Organic acids can affect pathogen growth in co-culture, but the production of acid and the subsequent decrease in pH can be an unwanted effect of using protective cultures in foods. Therefore, the acidification potentials of HA incubated in raw milk through a cheese-making temperature profile were determined (Table 3). The pH of STEC 0157 and HA co-culture decreased slightly over 7 days to 6.01 ± 0.62 compared to control at 5.35 ± 0.44 (Table 3). The pH of non-O157 STEC co-cultures with HA was significantly higher (6.15 ± 0.04) than control (5.06 ± 0.04) at day 4, but was similar by the end of the experiment. In *Salmonella* trials, co-culturing with HA did not change the pH compared to control throughout the whole duration of incubation (Table 3). While no significant pH variation between HA + S. *aureus* co-culture (*vs. S. aureus* alone) has been observed until 24 h incubation, an acidification was measured at 168 h incubation in raw milk. Nonetheless, the pH of raw milk indicated in the current and previous studies was highly variable from one experiment to another. This is possibly due to the changes in the microbial community of raw milk as a result of different factors including weather and season (Li *et al.,* 2018). With respect to pH values obtained from different co-cultures, the inhibition of S. *aureus* in these experiments was minimally affected by high acidification.

**Table 3. pH values (± SD) of raw milk co-cultured with shiga toxin-producing Escherichia coli O157:H7 (STEC 0157), non-O157:H7 STEC, Salmonella enterica or Staphylococcus aureus with and without Hafnia alvei (HA) during incubation following a cheesemaking temperature profile. (¹ Time of pathogen inoculation prior to overnight refrigerated storage; ^{a-b} Within each pathogen, values within columns with different letters differ at P < 0.05, while no significant differences between values without letters. Pathogen trials were analyzed separately.)**

| Time (h) | Inocu lation ¹ | 0 | 4 | 24 | 48 | 72 | 96 | 120 | 144 | 168 |
|---|---|---|---|---|---|---|---|---|---|---|
| STEC 0157 | 6.63 ± 0.16 | 6.65 ± 0.09 | 6.63 ± 0.04 | 6.66 ± 0.01 | 6.59 ± 0.08 | 6.21 ± 0.01 | 6.04 ± 0.10 | 5.90 ± 0.10 | 5.65 ± 0.28^{a} | 5.35 ± 0.44^{a} |
| STEC 0157 + | 6.82 ± | 6.66 ± | 6.50 ± | 6.48 ± | 6.52 ± | 6.50 ± | 6.45 ± | 6.28 ± | 6.24 ± | 6.01 ± |
| HA | 0.39 | 0.06 | 0.07 | 0.08 | 0.15 | 0.02 | 0.14 | 0.36 | 0.49^{b} | 0.62^{b} |
| Non-O157 STEC | 6.74 ± 0.02 | 6.69 ± 0.05 | 6.65 ± 0.04 | 6.56 ± 0.12 | 6.11 ± 0.04^{a} | 5.87 ± 0.12^{a} | 5.06 ± 0.04^{a} | 4.82 ± 0.15^{a} | 4.68 ± 0.07 | 4.65 ± 0.09 |
| Non-0157 STEC + HA | 6.72 ± 0.02 | 6.68 ± 0.05 | 6.55 ± 0.05 | 6.48 ± 0.09 | 6.44 ± 0.04^{b} | 6.45 ± 0.01^{b} | 6.15 ± 0.04^{b} | 5.49 ± 0.08^{b} | 4.81 ± 0.12 | 4.82 ± 0.09 |
| *Salmon ella* | 6.73 ± 0.07 | 6.73 ± 0.08 | 6.70 ± 0.01 | 6.57 ± 0.08 | 6.32 ± 0.03 | 6.23 ± 0.06 | 6.10 ± 0.03 | 6.00 ± 0.06 | 5.91 ± 0.05 | 5.86 ± 0.06 |
| *Salmon ella +* HA | 6.73 ± 0.06 | 6.72 ± 0.08 | 6.54 ± 0.09 | 6.40 ± 0.03 | 6.44 ± 0.05 | 6.41 ± 0.12 | 6.06 ± 0.79 | 5.86 ± 1.06 | 5.61 ± 0.94 | 5.27 ± 1.02 |
| S. *aureus* | 6.87 ± 0.01^{a} | 6.89 ± 0.06^{a} | 6.84 ± 0.05^{a} | 6.62 ± 0.18^{a} | ND | ND | ND | ND | ND | 6.19 ± 0.16^{a} |
| S. *aureus* + *HA* | 6.87 ± 0.01^{a} | 6.93 ± 0.12^{a} | 6.89 ± 0.06^{a} | 6.57 ± 0.06^{a} | ND | ND | ND | ND | ND | 4.89 ± 0.26^{b} |

In conclusion, the present example provides evidence on the efficacy of *H. alvei* in controlling the growth of *S. aureus* and staphylococcal enterotoxins production. The culture HA had an inhibitory effect against the growth of *S. aureus* following a cheese-making incubation and temperature profile. In addition, we observed slight effects on staphylococcal enterotoxins production in *H. alvei* co-culture grown in laboratory medium. These results pinpoint the potential use of *H. alvei* to control pathogens of concern and thus improve the safety of raw milk cheese.

### Example 6: Anti-Staphylococcus aureus activity of Hafnia alvei strains

The objective of this example was to investigate the inhibitory potential of different microbial strains belonging to the *Hafnia alvei* species against *Staphylococcus aureus* in model cheeses curds.

The *Staphylococcus aureus* Sa15 pathogenic strain was selected from the culture collection of UMRF (Unite Mixte de Recherche sur le Fromage 0545, INRAE, Aurillac, France) and was cultivated on Brain Heart Infusion (BHI) overnight at 37 °C. The culture was then enumerated on Baird Parker medium base (BP) supplemented with rabbit serum and incubated at 37°C overnight, was aliquoted in 1.5 mL tubes and stored at -80°C until their use for the experiment.

Six strains of *Hafnia alvei* isolated from artisanal cheeses were tested for their capacity to inhibit *S. aureus.* The *H. alvei* strains were identified as follow: B16, Cex 8, Pb1, Liv 2, B16, Roc4, and Ra3. One reference type strain was also included in the study: strain DSM 30 153 (DSMZ collection). All strains have been confirmed to belong to *H. alvei* by specific PCR and 16S rDNA sequencing. They were chosen as representative of six different phylogenic groups as determined by Enterobacterial Repetitive Intergenic Consensus (ERIC) PCR genotyping of a large *Hafnia alvei* strain collection at UMRF. These strains were inoculated on Brain Heart Infusion (BHI) and incubated overnight at 37 °C. The culture was then enumerated on BHI for 24h at 37°C, aliquoted in 1.5 mL tubes and stored at -80°C until their use for the experiment.

The control model cheese curd was performed with 45mL pasteurized milk incubated at 33 °C and inoculated with *Streptococcus thermophilus* MY800 1A (starter culture) at a concentration of 6.10⁶ CFU/mL and *S. aureus* Sa15 at a concentration of 10² CFU/mL. For the assay of cheese curds comprising *H.alvei,* each strain was inoculated at a concentration of 10⁷ CFU/mL. The milk was then coagulated with 12 µL of calf rennet (Beaugel Ets Coquard, Villefranche sur Sâone, France) for 40 min at 33 °C and centrifuged for 20 min at 14,000 rpm 33 °C. The supernatant was discarded and the pellet was incubated for 24h in a temperature controlled batch reactor programmed to mimic the decrease in temperature during the manufacture of uncooked pressed cheeses (the temperature decreasing from 33 °C to 21°C over a 24-hour period). After 24 hours, the model cheese curds were incubated at 9°C for 8 days. Samples were quantified at 0h, 24h, 48h and 8 days for the presence of S. *aureus* Sa15 and *H.alvei* in function of the treatment. All strains were replicated three times.

Before inoculation, a sample of 5mL of pasteurized milk was collected to confirm sterility on Plate Count Agar + milk (PCAL). Samples of 5mL of milk after inoculation (time : 0h) for each condition were also collected to confirm and quantify the inoculation of (1) *S. thermophilus* (inoculated on M17 medium and incubated at 42 °C overnight), (2) *S. aureus* Sa15 (inoculated on Baird Parker medium base (BP) supplemented with rabbit serum and incubated at 37 °C overnight) and (3) *H. alvei* strains (inoculated on BHI medium and incubated at 37 °C overnight). Furthermore, samples of about 7g of cheese model curd were used to enumerate *H. alvei* strains at 24h, 48h and 8 days, (inoculated on BHI medium and incubated at 37 °C overnight) and *S. aureus* Sa15 (inoculated on BP medium and incubated at 37 °C overnight).

In order to compare the different treatments with each other, an analysis of variance (ANOVA) was performed with RStudio. An LSD (least significant difference) test was also performed on these data to create significance groups.

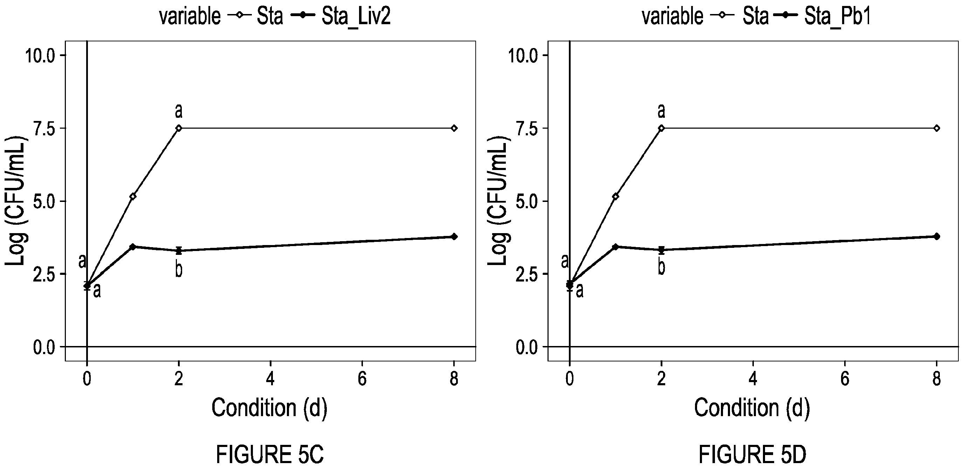

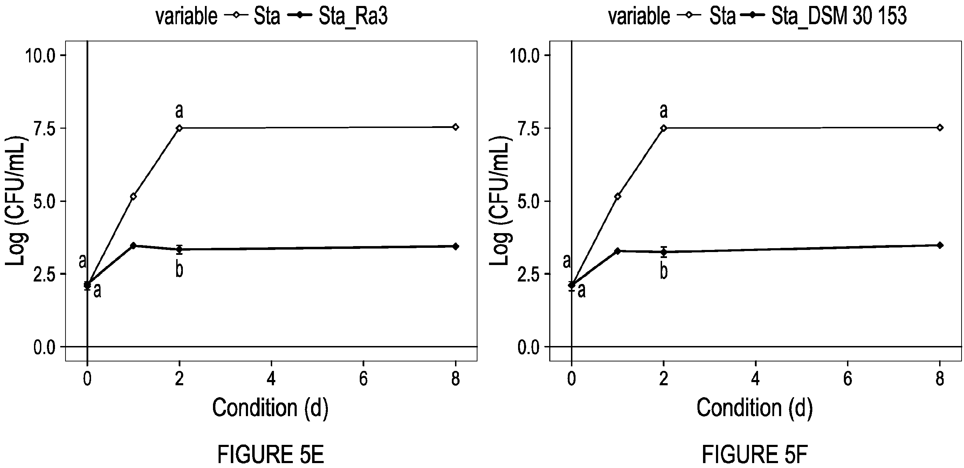

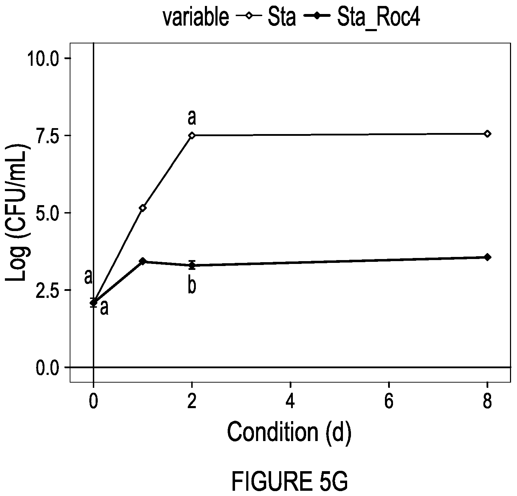

The growth of *S. aureus* Sa15 and seven strains of *H. alvei* was quantified at 0 h, 24 h, 48 h and 8 days and the results are shown in Figure 5. The growth of *S. aureus* Sa15 alone (i.e. not in presence of *H. alvei*) reached 5.15 log CFU/mL, 7.49 log CFU/mL and 7.53 log CFU/mL at 24 h, 48 h and 8 days, respectively. In the presence of *H. alvei* strains, the growth of *S. aureus* Sa15 never exceeded 3.5 log CFU/mL at 24 h, 48 h and 8 days. These results confirm that the seven strains of *H*. *alvei* tested inhibited the growth of *S. aureus* Sa15 in a model cheese curd.

The inhibitory power (IP) of the seven strains of *H. alvei* was also calculated at 24h, 48h and 8 days (Table 4). At 24h, all strains showed an inhibitory power of about 2 delta log CFU/mL. At 48h and 8 days, this inhibitory power increased at 4 delta log CFU/mL. These results also indicated that no difference in inhibitory power can be observed between the different strains of *H. alvei* tested.

**Table 4. Inhibitory power (IP) of H. alvei strains on S. aureus Sa15 on cheese model curd at 24h, 48h and 8 days. IP is expressed as delta log CFU/mL [(log CFU/mL of S. aureus Sa15 when inoculated alone) - (log CFU/mL of S. aureus Sa15 when inoculated with a strain of H. alvei)]. IP (delta log CFU :mL)**

| | | | |
|---|---|---|---|
| *Strain* | 24h | 48h | 8 days |
| B16 | 1.73 | 4.14,± 0,265 ^{a} | 3.90 |
| Cex8 | 1.67 | 4.09 ± 0,257^{a} | 3.85 |
| Liv2 | 1.72 | 4.17 ± 0,192^{a} | 3.74 |
| Pb1 | 1.73 | 4.20 ± 0,178^{a} | 3.77 |
| Ra3 | 1.70 | 4.15 ± 0,256^{a} | 4.09 |
| DSM 30 153 | 1.87 | 4.25 ± 0,303^{a} | 4.06 |
| Roc4 | 1.75 | 4.19 ± 0,209^{a} | 3.99 |

| | | | |
|---|---|---|---|
| At each time-point, values with the same letter are not significantly different (P < 0.05). | | | |

In conclusion, the results indicate that the *H. alvei* strains tested, members of 6 different phenotypic groups, as well as the reference strain DSM 30 153, show the same inhibitory power against *S. aureus* Sa15 in the model cheese curd.

### REFERENCES

American Cheese Society. (2018). State of the U.S. Artisan and specialty cheese industry. Report of Key Findings. Retrieved from https://www.cheesesociety.org/events-education/state-of-the-industry/. Accessed 13th April 2019
Benkerroum, N., Oubel, H., Zahar, M., Dlia, S., & Filali-Maltouf, A. (2000). Isolation of a bacteriocin-producing Lactococcus lactis subsp. lactis and application to control Listeria monocytogenes in moroccan jben. Journal of Applied Microbiology, 89(6), 960-968.
Callon, C., Arliguie, C., & Montel, M. (2016). Control of shigatoxin-producing Escherichia coli in cheese by dairy bacterial strains doi: https://doi.org/10.1016/j.fm.2015.08.009
Chr.Hansen. (2014). Cheese culture catalogue DVS® product range. Retrieved from https://hjemmeriet.com/da/ChrHansen/Brochures/GlobalCheeseCultureCatalogue_E N-2014.pdf. Accessed 17th March 2019
Cleveland, J., Montville, T. J., Nes, I. F., & Chikindas, M. L. (2001). Bacteriocins: Safe, natural antimicrobials for food preservation. International Journal of Food Microbiology, 71(1), 1-20.
Colonna, A., Durham, C., & Meunier-Goddik, L. (2011). Factors affecting consumers' preferences for and purchasing decisions regarding pasteurized and raw milk specialty cheeses. Journal of Dairy Science, 94(10), 5217-5226.
Currie, A., Galanis, E., Chacon, P. A., Murray, R., Wilcott, L., Kirkby, P., Parker, R. (2017). Outbreak of Escherichia coli O157: H7 infections linked to aged raw milk gouda cheese, Canada, 2013. Journal of Food Protection, 81(2), 325-331.
D'Amico, D. J., Druart, M. J., & Donnelly, C. W. (2008). 60-day aging requirement does not ensure safety of surface-mold-ripened soft cheeses manufactured from raw or pasteurized milk when listeria monocytogenes is introduced as a post-processing contaminant. Journal of Food Protection, 71(8), 1563-1571.
D'Amico, D. J., Druart, M. J., & Donnelly, C. W. (2010). Behavior of Escherichia coli O157: H7 during the manufacture and aging of gouda and stirred-curd cheddar cheeses manufactured from raw milk. Journal of Food Protection, 73(12), 2217-2224.
Delbès-Paus, C., Miszczycha, S., Ganet, S., Helinck, S., Veisseire, P., Pochet, S., Montel, M. (2013). Behavior of Escherichia coli O26:H11 in the presence of hafnia alvei in a model cheese ecosystem doi:https://doi.org/10.1016/j.ijfoodmicro.2012.10.019
Dominguez, M., Jourdan-Da Silva, N., Vaillant, V., Pihier, N., Kermin, C., Weill, F., de Valk, H. (2009). Outbreak of Salmonella enterica serotype montevideo infections in France linked to consumption of cheese made from raw milk. Foodborne Pathogens and Disease, 6(1), 121-128.
Egan, K., Field, D., Rea, M. C., Ross, R. P., Hill, C., & Cotter, P. D. (2016). Bacteriocins: Novel solutions to age old spore-related problems? Frontiers in Microbiology, 7, 461.
Forano, E., Bertin, Y., Montel, M., & Chaucheyras-durand, F. (2015). Use of hafnia alvei for reducing the carriage of Escherichia coli producing shiga toxins (STEC) in ruminants.
Holzapfel, W., Geisen, R., & Schillinger, U. (1995). Biological preservation of foods with reference to protective cultures, bacteriocins and food-grade enzymes. International Journal of Food Microbiology, 24(3), 343-362.
Kalchayanand, N., Hanlin, M., & Ray, B. (1992). Sublethal injury makes gram-negative and resistant gram-positive bacteria sensitive to the bacteriocins, pediocin AcH and nisin. Letters in Applied Microbiology, 15(6), 239-243.
Li, N., Y. Wang, C. You, J. Ren, W. Chen, H. Zheng, and Z. Liu. (2018). Variation in raw milk microbiota throughout 12 months and the impact of weather conditions. Scientific reports 8:2371.
Miszczycha, S. D., Perrin, F., Ganet, S., Jamet, E., Tenenhaus-Aziza, F., Montel, M. C., & Thevenot-Sergentet, D. (2013). Behavior of different shiga toxin-producing Escherichia coli serotypes in various experimentally contaminated raw-milk cheeses. Applied and Environmental Microbiology, 79(1), 150-158. doi:10.1128/AEM.02192-12.
Montel, M., Buchin, S., Mallet, A., Delbes-Paus, C., Vuitton, D. A., Desmasures, N., & Berthier, F. (2014). Traditional cheeses: Rich and diverse microbiota with associated benefits. International Journal of Food Microbiology, 177, 136-154.
Park, H., Marth, E., Goepfert, J., & Olson, N. (1970). The fate of Salmonella typhimurium in the manufacture and ripening of low-acid cheddar cheese. Journal of Milk and Food Technology, 33(7), 280-284.
Reitsma, C. J., & Henning, D. R. (1996). Survival of enterohemorrhagic Escherichia coli O157: H7 during the manufacture and curing of cheddar cheese. Journal of Food Protection, 59(5), 460-464.
Rodgers, S. (2008). Novel applications of live bacteria in food services: Probiotics and protective cultures. Trends in Food Science & Technology, 19(4), 188-197.
RODRÍGUEZ, E., ARQUÉS, J. L., GAYA, P., NUÑEZ, M., & MEDINA, M. (2001). Control of Listeria monocytogenes by bacteriocins and monitoring of bacteriocin-producing lactic acid bacteria by colony hybridization in semi-hard raw milk cheese. Journal of Dairy Research, 68(1), 131-137.
SACCO. (ND). Lyofast LPAL product. Retrieved from https://www.saccosystem.com/prod/en/lyofast-lpal-m91lpal8uk0/8306/. Accessed 23th April 2019
Schlesser, J., Gerdes, R., Ravishankar, S., Madsen, K., Mowbray, J., & Teo, A. (2006). Survival of a five-strain cocktail of Escherichia coli O157: H7 during the 60-day aging period of cheddar cheese made from unpasteurized milk. Journal of Food Protection, 69(5), 990-998.
Silva, C. C., Silva, S. P., & Ribeiro, S. C. (2018). Application of bacteriocins and protective cultures in dairy food preservation. Frontiers in Microbiology, 9, 594.
Stevens, K. A., Sheldon, B. W., Klapes, N. A., & Klaenhammer, T. R. (1991). Nisin treatment for inactivation of Salmonella species and other gram-negative bacteria. Applied and Environmental Microbiology, 57(12), 3613-3615.
Yilmaz, T., Moyer, B., MacDonell, R. E., Cordero-Coma, M., & Gallagher, M. J. (2009). Outbreaks associated with unpasteurized milk and soft cheese: An overview of consumer safety. Food Protection Trends, 29(4), 211-222.
Zhang, Y., Zhu, L., Dong, P., Liang, R., Mao, Y., Qiu, S., & Luo, X. (2018). Bioprotective potential of lactic acid bacteria: Effect of Lactobacillus sakei and Lactobacillus curvatus on changes of the microbial community in vacuum-packaged chilled beef. Asian-Australasian Journal of Animal Sciences, 31(4), 585-594. doi:10.5713/ajas.17.0540 [doi]

## Claims

1. Use of an effective amount of at least one strain of *Hafnia alvei* for preventing, inhibiting or reducing the growth of at least one foodborne pathogenic bacteria and/or the increase in concentration of an associated toxin production in a final food product.

2. The use of claim 1, wherein said at least one foodborne pathogenic bacteria belongs to the genus *Salmonella* or *Staphylococcus* or a mixture thereof.

3. The use of claim 2, wherein said at least one foodborne pathogenic bacteria belongs to the species *Salmonella enterica* or *Staphylococcus aureus* or a mixture thereof, preferably wherein said *Salmonella enterica* is S. *enterica* subsp. *enterica* serovar Typhimurium or S. *enterica* serovar Newport.

4. The use of any one of claims 1 to 3, wherein said final food product is meat, dairy products, vegetables, fruits or grains.

5. The use of any one of claims 1 to 4, wherein said final food product is a fermented food product.

6. The use of any one of claims 1 to 5, wherein said at least one strain of *Hafnia alvei* is *Hafnia alvei* B16 deposited under the number CNCM I-4710 on December 12, 2012.

7. A method for reducing preventing or inhibiting the growth of at least one foodborne pathogenic bacteria and/or the increase in concentration of an associated toxin production in a final food product, said method comprising contacting a constituent of the food product, the product itself, and/or packaging of the product with a protective culture comprising at least one strain of *Hafnia alvei.*

8. The method of claim 7, wherein said at least one foodborne pathogenic bacteria belongs to the genus *Salmonella* or *Staphylococcus* or a mixture thereof.

9. The method of claim 8, wherein said at least one foodborne pathogenic bacteria belongs to the species *Salmonella enterica* or *Staphylococcus aureus* or a mixture thereof.

10. The method of claim 9, wherein said *Salmonella enterica* is *S. enterica* subsp. *enterica* serovar Typhimurium or *S. enterica* serovar Newport.

11. The method of any one of claims 7 to 10, wherein said final food product is meat, dairy products, vegetables, fruits or grains.

12. The method of any one of claims 7 to 11, wherein said final food product is a fermented food product.

13. The method of any one of claims 7 to 12 further comprising fermenting a food material or a food matrix with the at least one protective culture comprising H. *alvei.*

14. The method of claim 13 further comprising adding a starter culture, an adjunct culture, a ripening culture or a mixture thereof to the food material, before the fermentation of the fermented food product.

15. The method of any one of claims 7 to 15, wherein said at least one strain of *Hafnia* a/vei is *Hafnia alvei* B16 deposited under the number CNCM I-4710 on December 12, 2012.
